# EUROPEAN PATENT SPECIFICATION

(11) **EP 2 497 626 B1**
(45) Date of publication and mention of the grant of the patent: **18.01.2017**
(21) Application number: 10828338.3
(22) Date of filing: 05.11.2010
(51) Int. Cl.: B29C 70/16, C08J 5/06, F01D 25/00, F02C 7/00, F04D 29/52, B29K 105/08, B29L 23/00, B29L 31/30, B29C 53/60, B29C 70/32, B29C 53/56

(54) **CYLINDRICAL STRUCTURE AND METHOD FOR MANUFACTURING THE SAME**
ZYLINDRISCHE STRUKTUR UND HERSTELLUNGSVERFAHREN DAFÜR
STRUCTURE CYLINDRIQUE, ET PROCÉDÉ DE FABRICATION CORRESPONDANT

(30) Priority: 06.11.2009 JP 2009255309
(43) Date of publication of application: 12.09.2012
(73) Proprietor: IHI Corporation, Tokyo 135-8710 (JP); IHI Aerospace Co., Ltd., Koto-Ku Tokyo 135-0061 (JP)
(72) Inventor: HARADA, Takashi, Tokyo 135-0061 (JP); SHIGENARI, Yu, Tokyo 135-0061 (JP); MIYASHITA, Masayori, Tokyo 135-0061 (JP); MURAKAMI, Tsutomu, Tokyo 135-8710 (JP)
(74) Representative: Carpmael, Robert Maurice Charles
(86) International application number: PCT/JP2010/069682
(87) International publication number: WO 2011/055779

(56) References cited:
- JP-A- 61 043 537
- JP-A- 63 053 019
- JP-A- 2009 107 337
- US-A- 2 594 693

## Description

### TECHNICAL FIELD

The present invention relates to a propulsion system in the aerospace field, or more specifically, to a cylindrical structure made of fiber-reinforced plastics such as a fan case of a jet engine or a motor case of a rocket engine, and to a method for manufacturing the same.

### BACKGROUND ART

In a jet engine for an airplane, as an example, outside air is taken in by a fan, compressed by a compressor and then used inside a combustor for combustion of fuel. After a part of generated energy is extracted by a turbine, the combustion gas is discharged backward from a nozzle located behind the engine. The entire jet engine is usually covered with and supported by an aerodynamically designed housing called a nacelle. The nacelle is huge as a whole and includes portions which are different in required properties such as strength. Accordingly, the nacelle is typically manufactured by being divided into multiple cowl components including a fan case, a core cowl, and the like. Each of the cowl components is optimally designed in accordance with the properties and the aerodynamic shape required therein.

In the case of the fan case, for example, it is not always necessary to use metal because heat resistance of the fan case is not required. Therefore, use of fiber-reinforced plastics instead of metal as a material of the fan case is being studied for the purpose of weight saving. A related technique is disclosed in US Patent Application Publication No. 2009/0098337. According to this technique, a preform is formed by winding a fabric made of fibers around a cylindrical tool and a cylindrical fiber-reinforced plastic body is manufactured from the preform.

On the other hand, an important property for the fan case is an impact energy absorbing capacity. For example, in case a component inside gets broken and hits the fan case at high speed, the component may further destroy other structural components if the component penetrates to the outside at the high speed. Therefore, the fan case needs to prevent such a component from penetrating to the outside or to adequately absorb kinetic energy thereof.

US2594693 discloses a helically-wound glass yarn and a uni-directional glass fabric that are alternately wounded around an axis of a bowl to form it.

JP63053019A discloses winding one fabric around a mandrel and winding one carbon fiber around the fabric. The carbon fiber is impregnated with a resin in advance. Accordingly, the resin can be absorbed in the fabric for the fabric and the carbon fiber to be integrated when the resin is cured.

### SUMMARY OF THE INVENTION

According to the studies conducted by the inventors of the present invention, it is not only the thickness of the fiber-reinforced plastics but also the orientation of the fibers that have strong influences on the shock-absorbing capacity. In order to form the preform made of the fibers efficiently into an adequate thickness, it is preferable to apply a method of winding a fabric around a tool as disclosed in the above-mentioned related technique. Further, in consideration of the impact energy absorbing capacity, it is preferable to orient a considerable proportion of the fibers contained in the fabric in a circumferential direction. However, a problem may arise when the aerodynamic shape required in the fan case is taken into account. This is because the very little stretchability of fibers inhibits a fabric from being wound around a tool, other than a tool having a straight cylindrical shape, without causing crimps in the case where the fibers are oriented in the circumferential direction.

The fibers in the circumferential direction are inevitably precluded when the aerodynamic shape required in the fan case is given priority. As a consequence, degradation in the properties such as the impact energy absorbing capacity needs to be tolerated. The present invention has been made in view of the above problems.

The invention is in the method of claim 1 and the structure of claim 5.

### BRIEF DESCRIPTION OF THE DRAWINGS

[Fig. 1] Fig. 1 is a schematic perspective view of an apparatus used for a manufacturing method according to an embodiment of the present invention.
[Fig. 2] Fig. 2 is another perspective view of the apparatus showing a certain stage of the manufacturing method.
[Fig. 3] Fig. 3 is a schematic plan view showing an example of a non-crimp fabric.
[Fig. 4] Fig. 4 is a plan view showing a step of winding roving.
[Fig. 5] Fig. 5 is still another perspective view of the apparatus.
[Fig. 6] Fig. 6 is a side view of a winding device included in the apparatus, which shows a cross section of a mandrel.
[Fig. 7] Fig. 7 is a schematic elevational view of a jet engine including a fan case manufactured in accordance with the manufacturing method.
[Fig. 8] Fig. 8 is an example of a cross section taken along an axial direction of a product manufactured in accordance with the manufacturing method.

### MODES FOR CARRYING OUT THE INVENTION

An embodiment of the present invention will be described below with reference to the drawings.

For the convenience of explanation, directions indicated as L and R in the drawings will be expressed respectively as a left direction and a right direction while directions indicated as FR and FF will be expressed respectively as a rear direction and a front direction. However, these expressions are not limitative to the present invention.

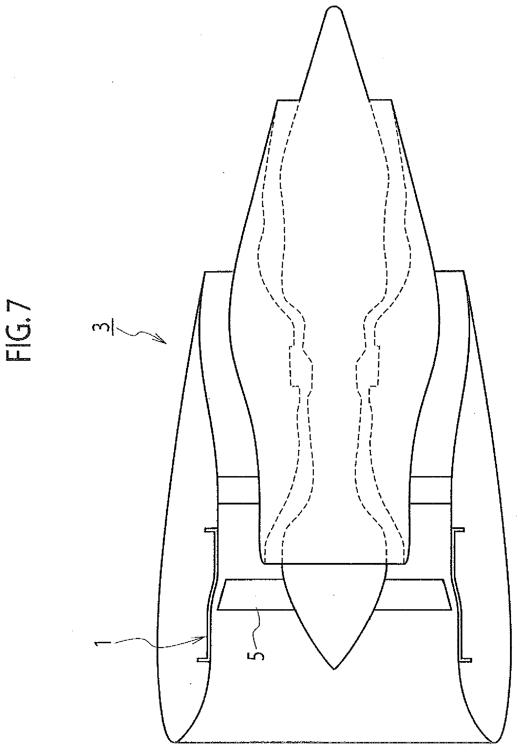

A manufacturing method according to this embodiment is applicable to manufacture of a fan case of a jet engine for an airplane shown in Fig. 7 as an example. An engine 3 generally includes an engine body provided with a fan blade 5, and a nacelle for covering and supporting the engine body. The nacelle is formed of multiple cowl components. Each cowl component is substantially symmetrical about an axis. Among the cowl components, a component covering the fan 5 is a fan case 1. The fan case 1 has a shape substantially approximate to a cylindrical shape which is, however, a non-straight cylindrical shape designed from an aerodynamic perspective. In the example of Fig. 7, the fan case 1 is formed into a gently tapered shape at a region 1a close to the fan blade 5 and into substantially straight cylindrical shapes at other regions, and is provided with flange portions at both ends in an axial direction. Naturally, this embodiment is also applicable to other shapes. As described previously, a non-stretchable fabric cannot be formed into the tapered shape of the region 1a without causing crimps.

The fan case 1 is made of appropriate fiber-reinforced plastics and is manufactured by forming fibers into a shape, impregnating the fibers with resin, and curing the resin as will be described further in detail below. The fibers are preferably carbon fibers, aramid fibers, glass fibers or a composite of one or more of the above, for example. However, the fibers are not necessarily limited to the foregoing. The resin is preferably thermosetting resin, for instance, and epoxy resin, phenol resin, and polyimide resin can be exemplified in particular. However, the resin is not necessarily limited to the foregoing. The fibers in the form of fabric and in the form of bundle are used in combination, are respectively oriented in specific directions and are alternately stacked.

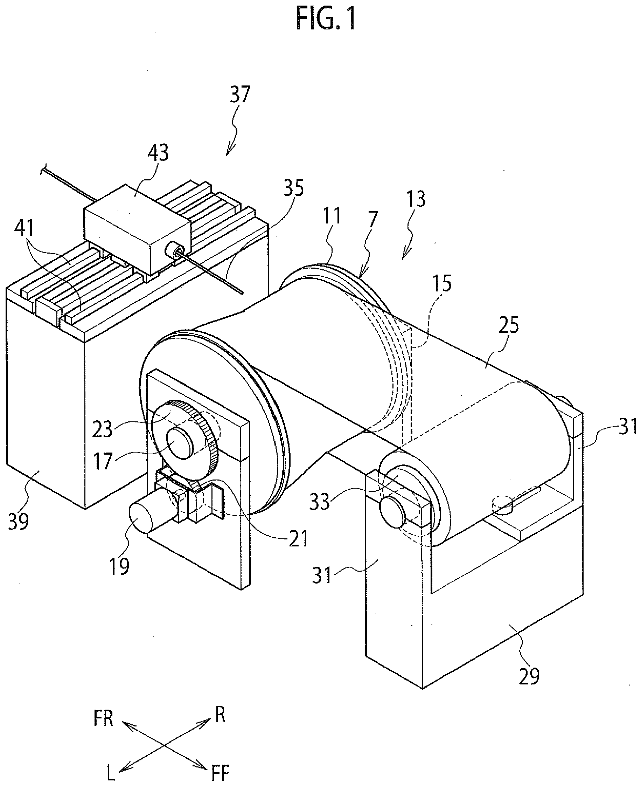

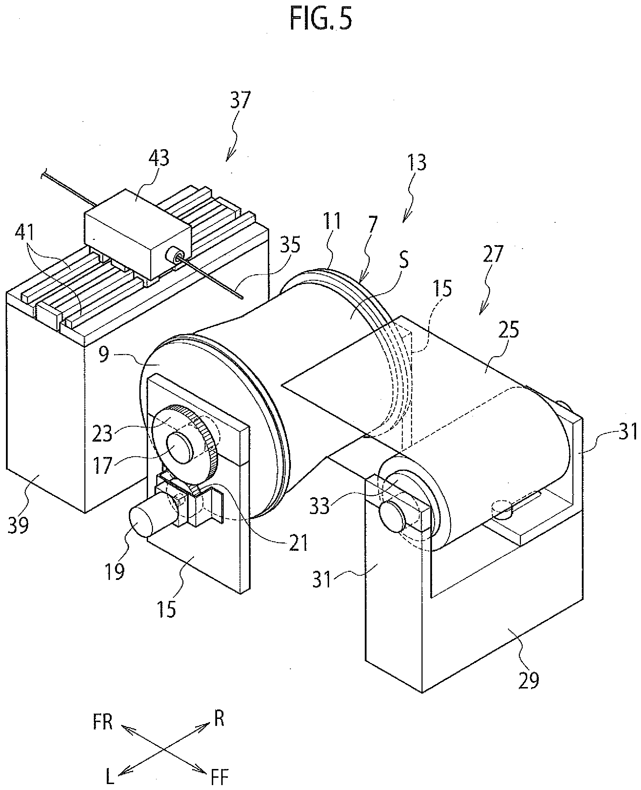

The fibers are wound around a mandrel by a manufacturing apparatus shown as an example in Fig. 1 to Fig. 6 and are formed into a shape, thereby constituting a preform 1F of the fan case 1. Referring to Fig. 5, the manufacturing apparatus includes a winding device 13. The winding device 13 includes a mandrel 7. The mandrel 7 is supported by a rotating shaft 17 which is rotatably supported by supports 15. The winding device 13 also includes a motor 19. The motor 19 is connected to a main drive gear 21 and the main drive gear 21 is drivably engaged with a driven gear 23 which is connected to the rotating shaft 17. Thus the mandrel 7 is rotated around the axis by driving of the motor 19. The supports 15 preferably have a structure such as a vertically separable structure which facilitates attachment and detachment of the mandrel 7.

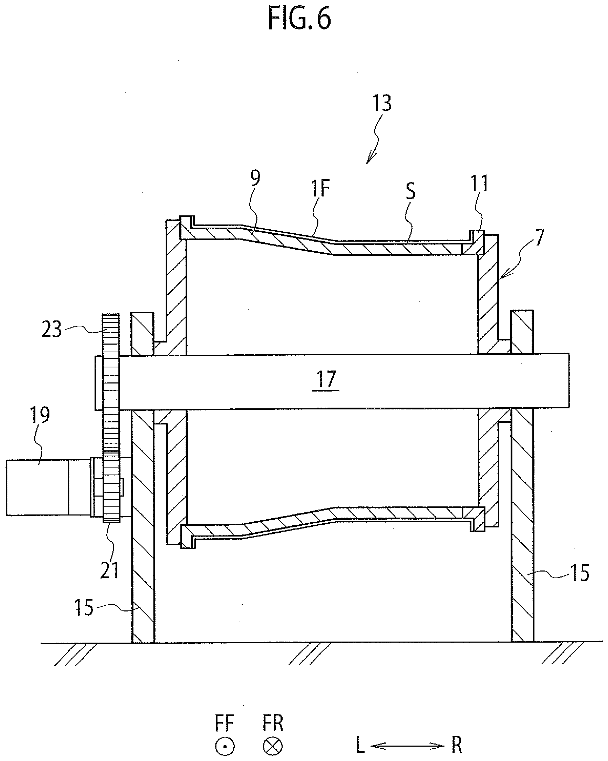

As shown in Fig. 6, the mandrel 7 has a peripheral surface S with a contour suitable to form the shape of the fan case 1, i.e., a non-straight cylindrical shape designed from the aerodynamic perspective. The fibers are wound around the mandrel 7 and thereby formed into the shape of the fan case 1. Meanwhile, the mandrel 7 can be separated into a body 9 and a flange 11 so that the formed fibers can be taken out by separation.

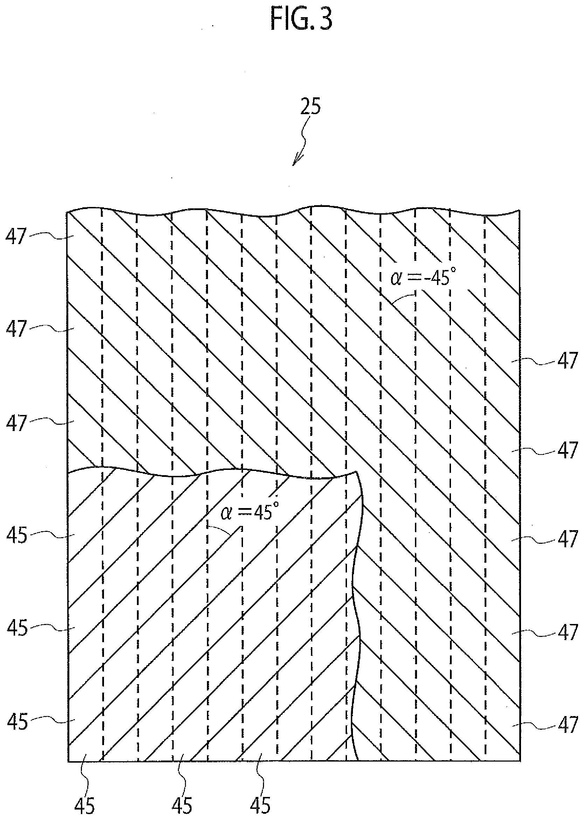

The fibers are supplied in the form of a fabric 25. The fabric 25 is preferably a non-crimp fabric as schematically shown in Fig. 3. Not being defined as having a meaning different from a standard one known to those skilled in the art, the non-crimp fabric means a fabric woven such that main fibers do not intersect one another. In the illustrated example, main fibers 45 and 47 have inclined angles α with respect to a longitudinal direction of the fabric (which coincides with a circumferential direction after forming) equal to 45° and -45°, respectively. These main fibers 45 and 47 are stitched together by using thin threads. Alternatively, it is also possible to use any of a plain fabric, a twilled fabric, and a bias fabric instead of the non-crimp fabric. Moreover, it is also possible to use a combination of two or more of the above instead. In order to ensure stretching properties in the longitudinal direction, it is preferable to provide the main fibers with the inclined angles α in such a manner as to intersect with the circumferential direction to a practically significant degree. The inclined angles α are set preferably in a range from 20° to 70° or more preferably in a range from 30° to 60°. Moreover, the fabric 25 preferably does not include fibers having an inclined angle below 10° at least as the main fibers.

Referring to Fig. 5, the manufacturing apparatus includes a supply device for supplying the fabric made of the fibers to the winding device 13. The supply device includes a spool 33 for storing the fibers and the spool 33 is rotatably supported by a support 31 or the like on a mount 29. The support 31 preferably has a structure such as a vertically separable structure which facilitates attachment and detachment of the spool 33. Moreover, the support 31 preferably has a structure which can change the width thereof so that the support 31 can attach spools having various widths.

The fibers are also supplied in the form of bundle. Preferably, a roving can be used as the form of bundle. Not being defined as having a meaning different from a standard one known to those skilled in the art, the roving means a bundle of multiple fibers each of which is not twisted at all or slightly twisted. In other words, the fibers are oriented in the longitudinal direction of the roving. The fibers of such roving 35 may be made of the same material as the fibers of the fabric 25 or of a different material therefrom.

The manufacturing apparatus further includes a guiding device 37 in order to guide the roving 35. The guiding device 37 is disposed on an opposite side of the supply device with respect to the winding device 13, for example.

The guiding device 37 includes a mount 39, guide rails 41 installed on the mount 39, and a head 43 which is guided by the guide rails and is movable in the width direction. Although it is not illustrated in the drawing, the head 43 moves in the width direction while being driven by an actuator. The head 43 includes a guide way configured to guide the roving 35 as illustrated in the drawing, guides the roving 35 to an appropriate position, and supplies the roving 35 to the winding device 13.

The fibers are formed into the shape as described below by using the aforementioned manufacturing apparatus.

Referring to Fig. 1, the fabric 25 in a rolled state is attached to the spool 33. The width of the fabric 25 is equal to an axial length of the fan case 1. Alternatively, the total width may be set longer than the axial length and then fitted to the axial length by cutting both ends after the shape is formed. The roving 35 is stored on an unillustrated spool and is passed through the guide way on the head 43. Preferably, the fabric 25-and the roving 35 are supplied in the form of so-called prepreg being impregnated with resin in advance. However, the resin may be impregnated afterward.

The fabric 25 is drawn out of the spool 33 and one end thereof is attached to the peripheral surface S of the mandrel 7. Then, the mandrel 7 is rotated one revolution or more by driving of the motor 19 and the fabric 25 is wound in the circumferential direction around the mandrel 7. The fabric 25 may exceed one layer and form multiple layers.

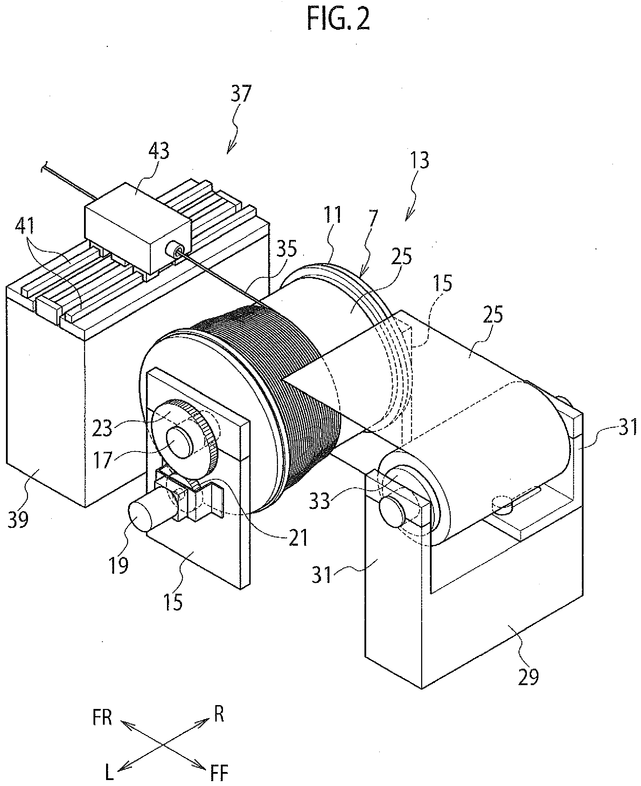

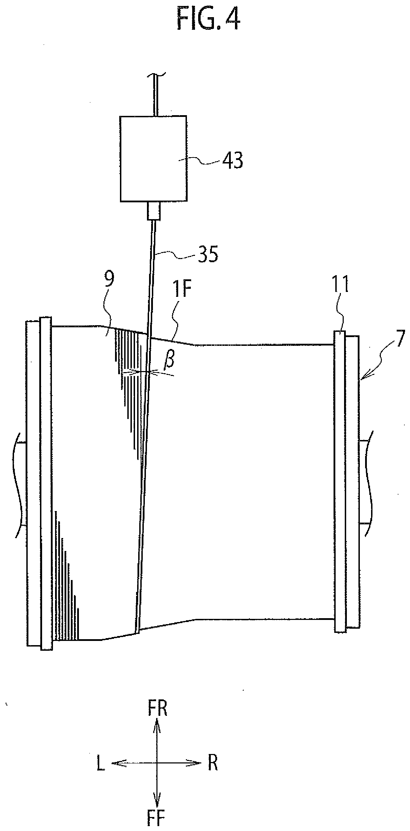

Next, referring to Fig. 2, the head 43 is located in such a manner as to align an end of the roving 35 with one end of the layer of the fabric 25, and the end of the roving 35 is attached to the one end. Subsequently, the roving 35 is wound around the layer of the fabric 25 in such a manner as to form a helix by continuously rotating the mandrel 7 and moving the head 43 to another end. As shown in Fig. 4, the direction of the roving 35 thus wound is very close to the circumferential direction but is provided with a slightly inclined angle β with respect to the circumferential direction so as to form the helix. Specifically, the inclined angle β with respect to the circumferential direction slightly exceeds 0°. In light of the impact resistance or the impact energy absorbing capacity, the smaller inclined angle β is more advantageous. Accordingly, the helix is preferably formed dense without gaps. In other words, the inclined angle β is preferably set below 10°. In addition, the roving 35 may form multiple layers exceeding one layer.

The step of winding the fabric and the step of winding the roving described above may be carried out in reverse order.

Similar steps to those described above are repeated in order to obtain the required thickness. The preform 1F including alternate lamination of the fabric and the roving is thus obtained.

In the above description, the fabric or the roving is wound by rotating the mandrel. Instead, the spool or the roving supply device may be revolved around the fixed mandrel. Such a method can be implemented, for example, by setting the mandrel upright and installing a unit to revolve the device around the mandrel.

After the above-described steps, the preform 1F is detached from the supports 15 together with the mandrel 7. When the fabric 25 and the roving 35 are not impregnated with the resin in advance, the preform 1F is impregnated with the resin at this point by injecting the resin from outside. Alternatively, the entire preform 1F may be dipped into the resin so as to achieve the resin impregnation.

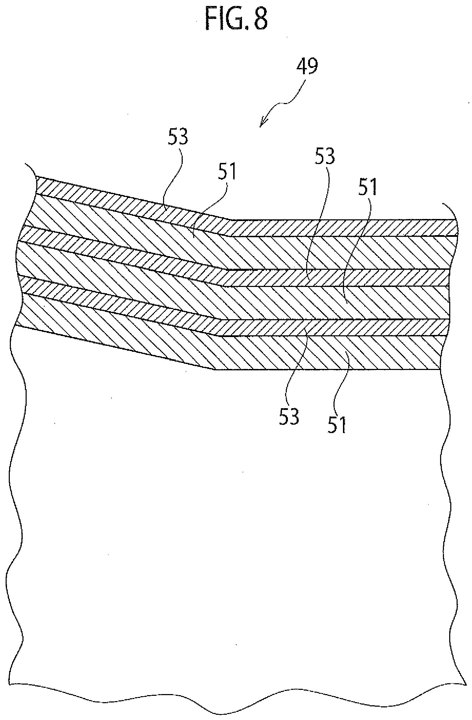

The preform 1F which remains in the state of being wound around the mandrel 7 is subjected to heating. Preferably, an appropriate heating furnace is used. The heating may be conducted in combination with appropriate pressurization by using a furnace such as an autoclave. The resin is cured by the heating and the fabric and the roving are joined together by the resin, whereby a fan case 49 made of the fiber-reinforced plastics is obtained. An appropriate finishing process is carried out when required. As shown in Fig. 8, first layers 51 originated from the fabric and second layers 53 originated from the roving are alternately laminated in the fan case 49. As described previously, the fibers in the first layer 51 preferably form the inclined angle in the range from 20° to 70° with respect to the circumferential direction while the fibers in the second layer 53 preferably form the inclined angle greater than 0° and equal to or below 10° with respect to the circumferential direction.

In all aspects of the strength, the impact resistance, and the impact energy absorbing capacity, there is an advantage of causing the fibers to extend in multiple directions inclusive of the circumferential direction. According to the above-described embodiment, the fibers extend substantially in the circumferential direction at least in the layer originated from the roving. Meanwhile, the fibers extend in another direction in the layer originated from the fabric and located adjacent to the former layer. Therefore, the excellent strength, impact resistance, and impact energy absorbing capacity can be obtained by a combination of both of the layers. Since the fabric does not have to contain the fibers extending in the circumferential direction, the fabric can ensure stretching properties in terms of the circumferential direction. Meanwhile, the roving can be wound around various shapes by nature. Thus, various shapes other than the straight cylindrical shape can be formed in accordance with the above-described method. That is, the above-described method can realize aerodynamically advantageous shapes.

The manufacturing method and the product described above are also applicable to other cylindrical structures besides the fan case. For example, the method and product are applicable to a component for covering a propulsion system in the aerospace field, or to a motor case of a rocket engine in particular. Without limitation to the propulsion system, the method and product are also applicable to various machine components aimed at resisting impact.

Although the present invention has been described with reference to a preferred embodiment, it is to be understood that the present invention is not limited only to the embodiment. A person with ordinary skill in the art can embody the present invention by modifying and changing the embodiment based on the contents disclosed above.

### INDUSTRIAL APPLICABILITY

The invention enables manufacture of a cylindrical structure such as a fan case or a motor case, which has a sufficient impact energy absorbing capacity as well as an aerodynamically advantageous shape.

## Claims

1. A method for manufacturing a cylindrical structure having an axial direction, comprising:
winding a fabric (25) around a mandrel in a circumferential direction that is perpendicular to the axial direction, the fabric containing first fibers oriented in a first direction intersecting the circumferential direction and being impregnated with a resin in advance;
winding a roving (35) into a helical shape around the mandrel, the roving containing second fibers oriented in a longitudinal direction of the roving;
repeating the winding of the fabric and the winding of the roving in alternating manner; and
joining the fabric and the roving together by using the resin, wherein
the first direction has an inclined angle (α) in a range from 20 degrees to 70 degrees with respect to the circumferential direction, and
the helical shape has an inclined angle (β) greater than 0 degrees and equal to or below 10 degrees with respect to the circumferential direction.

2. The method of claim 1, wherein the roving is impregnated with the resin in advance.

3. The method of claim 1, further comprising:
impregnating the fabric and the roving with the resin.

4. The method of claim 1, wherein the fabric comprises a non-crimp fabric.

5. A cylindrical structure having an axial direction, comprising:
a plurality of first layers each including a fabric (25) containing first fibers oriented in a first direction intersecting a circumferential direction being perpendicular to the axial direction;
a plurality of second layers each including a roving (35) containing second fibers oriented in a longitudinal direction of the roving, the roving being formed into a helical shape; and
a resin joining the first layers and the second layers together, wherein
each first layer and each second layer are alternately stacked,
each first layer is impregnated with the resin in advance,
the resin is cured to join the first layers and the second layers,
the first direction has an inclined angle (α) in a range from 20 degrees to 70 degrees with respect to the circumferential direction
the helical shape has an inclined angle (β) greater than 0 degrees and equal to or below 10 degrees with respect to the circumferential direction.

6. The cylindrical structure of claim 5, wherein the fabric comprises a non-crimp fabric.

## Patentansprüche

1. Verfahren zum Herstellen einer zylindrischen Struktur, aufweisend eine axiale Richtung, umfassend:
Aufwickeln eines Gewebes (25) um eine Spindel herum, in einer Umfangsrichtung welche zur axialen Richtung senkrecht steht, wobei das Gewebe erste Fasern umfasst, welche in einer ersten die Umfangsrichtung kreuzende Richtung gerichtet und mit einem Harz im Vorab getränkt sind;
Aufwickeln eines Vorgarns (35) in einer Schraubenform um die Spindel, wobei das Vorgarn zweite Fasern enthält, welche in einer Längsrichtung des Vorgarns gerichtet sind;
alternierendes Wiederholen des Aufwickelns des Gewebes und des Aufwickelns des Vorgarns;
Zusammenfügen des Gewebes und des Vorgarns durch Verwendung des Harzes, wobei
die erste Richtung einen Neigungswinkel (α) in einem Bereich zwischen 20 und 70 Grad relativ zur Umfangsrichtung bildet, und
die Schraubenform einen Neigungswinkel (β) größer als 0 Grad und kleiner als oder gleich 10 Grad relativ zur Umfangsrichtung bildet.

2. Verfahren nach Anspruch 1, wobei das Vorgarn mit dem Harz im Vorab getränkt wird.

3. Verfahren nach Anspruch 1, ferner umfassend:
das Tränken des Gewebes und des Vorgarns mit dem Harz.

4. Verfahren nach Anspruch 1, wobei das Gewebe ein ungekrümmtes Gewebe umfasst.

5. Zylindrische Struktur mit einer axialen Richtung, umfassend:
eine Mehrzahl von ersten Schichten, welche jeweils ein Gewebe (25) umfassen, welches erste Fasern enthält, welche in einer die senkrecht zur axialen Richtung stehenden Umfangsrichtung kreuzenden Richtung gerichtet sind;
eine Mehrzahl von zweiten Schichten, welche jeweils ein Vorgarn (35) umfassen, welches zweite Fasern enthält, welche in einer Längsrichtung des Vorgarns gerichtet sind, wobei das Vorgarn in einer Schraubenform geformt ist; und
ein Harz, welches die ersten und die zweiten Schichten miteinander verbindet, wobei
jede erste Schicht und jede zweite Schicht alternierend aufeinandergestapelt sind,
jede erste Schicht mit dem Harz im Vorab getränkt ist,
das Harz zum Verbinden der ersten und zweiten Schichten gehärtet wird,
die erste Richtung einen Neigungswinkel (α) im Bereich zwischen 20 und 70 Grad relativ zur Umfangsrichtung bildet,
die Schraubenform einen Neigungswinkel (β) größer als 0 Grad und kleiner als oder gleich 10 Grad relativ zur Umfangsrichtung bildet.

6. Zylindrische Struktur nach Anspruch 5, wobei das Gewebe ein ungekrümmtes Gewebe umfasst.

## Revendications

1. Procédé de fabrication d'une structure cylindrique ayant une direction axiale, comprenant les étapes ci-dessous :
enroulement d'un tissu (25) autour d'un mandrin dans une direction circonférentielle perpendiculaire à la direction axiale, le tissu contenant des premières fibres orientées dans une première direction coupant la direction circonférentielle et étant imprégnées d'avance d'une résine ;
enroulement d'une mèche (35) en une forme hélicoïdale autour du mandrin, la mèche contenant des deuxièmes fibres orientées dans une direction longitudinale de la mèche ;
répétition de l'enroulement du tissu et de l'enroulement de la mèche d"une manière alternée ; et
liaison du tissu et de la mèche par l'intermédiaire de la résine ; dans lequel :
la première direction forme un angle incliné (α) compris dans un intervalle allant de 20 degrés à 70 degrés par rapport à la direction circonférentielle ; et
la forme hélicoïdale forme un angle incliné (β) supérieur à 0 degré et égal ou inférieur à 10 degrés par rapport à la direction circonférentielle.

2. Procédé selon la revendication 1, dans lequel la mèche est imprégnée d'avance de la résine.

3. Procédé selon la revendication 1, comprenant en outre l'étape ci-dessous :
imprégnation du tissu et de la mèche de la résine.

4. Procédé selon la revendication 1, dans lequel le tissu comprend un tissu sans ondulations.

5. Structure cylindrique ayant une direction axiale, comprenant :
plusieurs premières couches, englobant chacune un tissu (25) contenant des premières fibres orientées dans une première direction coupant une direction circonférentielle perpendiculaire à la direction axiale ;
plusieurs deuxièmes couches, englobant chacune une mèche (35) contenant des deuxièmes fibres orientées dans une direction longitudinale de la mèche, la mèche étant formée en une forme hélicoïdale ; et
une résine reliant les premières couches et les deuxièmes couches ; dans laquelle :
chaque première couche et chaque deuxième couche sont empilées de manière alternée ;
chaque première couche est imprégnée d'avance de la résine ;
la résine est durcie pour relier les premières couches et les deuxièmes couches ;
la première direction forme un angle incliné (α) compris dans un intervalle allant de 20 degrés à 70 degrés par rapport à la direction circonférentielle ;
la forme hélicoïdale forme un angle incliné (β) supérieur à 0 degré et égal ou inférieur à 10 degrés par rapport à la direction circonférentielle.

6. Structure cylindrique selon la revendication 5, dans laquelle le tissu comprend un tissu sans ondulations.
